# FASCICULE DE BREVET EUROPEEN

(11) **EP 1 637 857 B1**
(45) Date de publication et mention de la délivrance du brevet: **12.09.2007**
(21) Numéro de dépôt: 05300605.2
(22) Date de dépôt: 20.07.2005
(51) Int. Cl.: G01L 5/22

(54) **Double butée électrique pour frein de stationnement électrique**
Doppel Endwinkel für eine Feststellbremse.
Double clamping member for an electrical parking brake.

(30) Priorité: 25.08.2004 FR 0451899
(43) Date de publication de la demande: 22.03.2006
(73) Titulaire: Peugeot Citroen Automobiles SA, 78943 Vélizy-Villacoublay Cedex (FR)
(72) Inventeur: Bailleux, François, 91400, Val d'Albian (FR)

(56) Documents cités:
- WO-A-98/56633
- WO-A-20/04020265
- DE-A1- 10 043 739
- FR-A- 2 848 971
- US-B1- 6 213 259

## Description

La présente invention concerne un capteur d'efforts axiaux multiples. Elle concerne également un détecteur de serrage et de desserrage d'un frein de stationnement électrique.

L'invention trouve une application particulièrement avantageuse dans le domaine de l'industrie automobile.

Le document WO 2004/020265 décrit un capteur d'efforts axiaux mécanique avec des components électriques.

Actuellement, de nombreux organes des véhicules automobiles bénéficient de commandes qui sont de plus en plus assistées, ceci en vue d'obtenir un meilleur agrément de conduite et un plus grand confort. C'est ainsi que le freinage, la direction, l'ouverture des vitres, le réglage des sièges, etc, sont devenus à commande soit assistée, soit électrique.

Les freins de stationnement n'ont pas échappé à cette tendance puisque que des dispositifs ont été récemment proposés, consistant en un frein de stationnement électrique où la poignée de traction manuelle est remplacée par un motoréducteur qui a pour fonction essentielle de tirer sur les câbles de frein pour serrer le frein et de relâcher la traction exercée pour le desserrer.

De façon pratique, un système de frein de stationnement électrique doit détecter au moins deux positions, à savoir une position desserrée et au moins une position serrée ; il est en effet possible d'envisager plusieurs valeurs de serrage différentes, par exemple deux, l'une correspondant à un stationnement sur sol horizontal, l'autre à un sol en pente.

Cette détection de positions est nécessaire afin de commander l'arrêt du motoréducteur du frein électrique lorsque l'une ou l'autre de ces positions est atteinte.

La position desserrée est caractérisée par un effort dans les câbles pratiquement égal à zéro, tandis que dans une position serrée l'effort appliqué à chacun des câbles est beaucoup plus important pouvant atteindre une valeur de 1 250 N environ.

Actuellement, les freins de stationnement électriques sont équipés de divers capteurs pilotés par un calculateur. Ces capteurs peuvent être soit un capteur de courant moteur, donnant une image de l'effort, et un capteur de rotation du motoréducteur, soit un capteur d'effort et un capteur de vitesse du motoréducteur.

Cependant, les impératifs de réduction des coûts des composants ont conduit à rechercher des solutions techniques plus simples et surtout plus économiques.

C'est dans ce contexte appliqué aux freins de stationnement électriques qu'il a été proposé de supprimer le calculateur et les capteurs associés pour le remplacer par un système de détection de serrage et de desserrage purement mécanique.

A cet effet, il faut pouvoir disposer de capteurs mécaniques capables de détecter à la fois des efforts de faibles valeurs, comme au desserrage du frein, et des efforts de valeurs beaucoup plus élevées, comme au serrage du frein, en tenant compte du fait que l'on peut imposer au frein plusieurs valeurs de serrage.

Pour résoudre ce problème technique, l'invention propose un capteur d'efforts axiaux multiples, remarquable en ce que ledit capteur comprend une pluralité de capteurs élémentaires axiaux, couplés mécaniquement en série, chaque capteur élémentaire étant destiné à détecter un effort axial donné, et chaque capteur élémentaire comprenant :
- un corps de capteur destiné à recevoir un effort axial,
- une butée pour ledit corps de capteur,
- un moyen élastique en appui sur le corps d'un capteur élémentaire immédiatement voisin, et apte à appliquer, au repos, ledit corps de capteur contre ladite butée,
- un détecteur de course apte à détecter une course donnée du corps de capteur effectuée sous l'action dudit effort donné à l'encontre du moyen élastique,
le corps de capteur présentant avec le corps dudit capteur élémentaire immédiatement voisin un débattement axial au moins égal à ladite course donnée, et le moyen élastique dudit capteur élémentaire immédiatement voisin présentant une raideur supérieure à celle du moyen élastique dudit capteur élémentaire.

Ainsi, le capteur d'efforts selon l'invention comporte en un seul composant autant de capteurs élémentaires que d'efforts à détecter, d'où une réduction du nombre de pièces, et donc de coût, ainsi qu'un encombrement réduit.

Dans une application à un frein de stationnement électrique, un premier capteur élémentaire sera destiné à détecter l'effort de desserrage. Ce dernier étant pratiquement égal à zéro, le moyen élastique correspondant, un ressort par exemple, aura une raideur très faible. Le premier capteur élémentaire sera mécaniquement suivi d'un ou plusieurs capteurs élémentaires pour la détection du ou des efforts de serrage, beaucoup plus importants. Les moyens élastiques associés devront donc présenter une raideur plus grande.

Afin de limiter encore l'encombrement du capteur d'efforts conforme à l'invention, on prévoit que le corps du capteur élémentaire immédiatement voisin entoure le corps dudit capteur élémentaire sensiblement de manière coaxiale. Comme on le verra en détail plus loin, cette configuration conduit à un empilement concentrique des corps de capteurs élémentaires conduisant à un capteur extrêmement compact.

Le capteur d'efforts axiaux multiples selon l'invention peut alors être intégré à un frein de stationnement électrique afin de détecter le serrage et le desserrage du frein.

C'est ainsi que, conformément à l'invention, un détecteur de serrage et de desserrage d'un frein de stationnement électrique, comprenant un moteur électrique destiné à appliquer sur des câbles de frein au moins un effort de serrage et un effort de desserrage, est remarquable en ce que ledit détecteur de serrage et de desserrage comprend un moyen de transmission desdits efforts à un capteur d'efforts axiaux selon l'invention.

La détection d'efforts telle que recommandée par l'invention est bien plus avantageuse que la détection de position parfois utilisée, car cette dernière ne peut suivre l'évolution du système d'usure et de tassement des câbles et qu'il perd en dynamique de serrage, devant réaliser une course supérieure à celle du détecteur conforme à l'invention.

Selon un mode de réalisation de l'invention, ledit détecteur de course est un interrupteur de fin de course apte à commander l'arrêt dudit moteur électrique. Cette disposition présente l'avantage que tous les fils électriques sont fixes, ce qui améliore la fiabilité du système.

L'invention prévoit par ailleurs que ledit moyen de transmission est un palonnier couplé à une vis sans fin.

Dans cet exemple de réalisation, le palonnier reçoit la somme des efforts exercés sur les câbles et l'applique à la vis sans fin à laquelle il est couplé. La détection d'efforts peut alors être effectuée du fait que, selon l'invention, le détecteur de serrage et de desserrage est disposé à une extrémité de ladite vis sans fin.

Cette solution de transmission d'efforts est bien préférable à celle mise en oeuvre par certains constructeurs qui consiste à placer les deux câbles en ligne, bloquer les arrêts de gaine et tirer sur les deux embouts de câble en action/réaction. Il en résulte un encombrement bien supérieur à celui de la solution proposée par l'invention.

Avantageusement, il est prévu par l'invention que le moyen élastique du capteur élémentaire de l'effort de serrage est pré-chargé. On constitue de la sorte une réserve d'élasticité dans le frein afin d'éviter les effets de dilatation thermique des disques de frein.

Enfin, selon l'invention, un moyen élastique équivalent au moyen élastique du capteur élémentaire de l'effort de desserrage est disposé à l'autre extrémité de ladite vis sans fin. Cette disposition permet en effet de réduire la sensibilité aux frottements autour de la position à effort nul.

La description qui va suivre en regard des dessins annexés, donnés à titre d'exemples non limitatifs, fera bien comprendre en quoi consiste l'invention et comment elle peut être réalisée.

La figure 1 est un schéma d'un frein de stationnement électrique comportant un détecteur de serrage et de desserrage conforme à l'invention.

La figure 2a est une vue en coupe d'un détecteur de serrage et de desserrage conforme à l'invention.

La figure 2b est une vue en coupe d'une variante de réalisation du détecteur de serrage et de desserrage de la figure 2a.

La figure 3 est un schéma d'un dispositif de compensation de frottement au desserrage.

La figure 4 est un schéma électrique d'un détecteur de serrage et de desserrage conforme à l'invention.

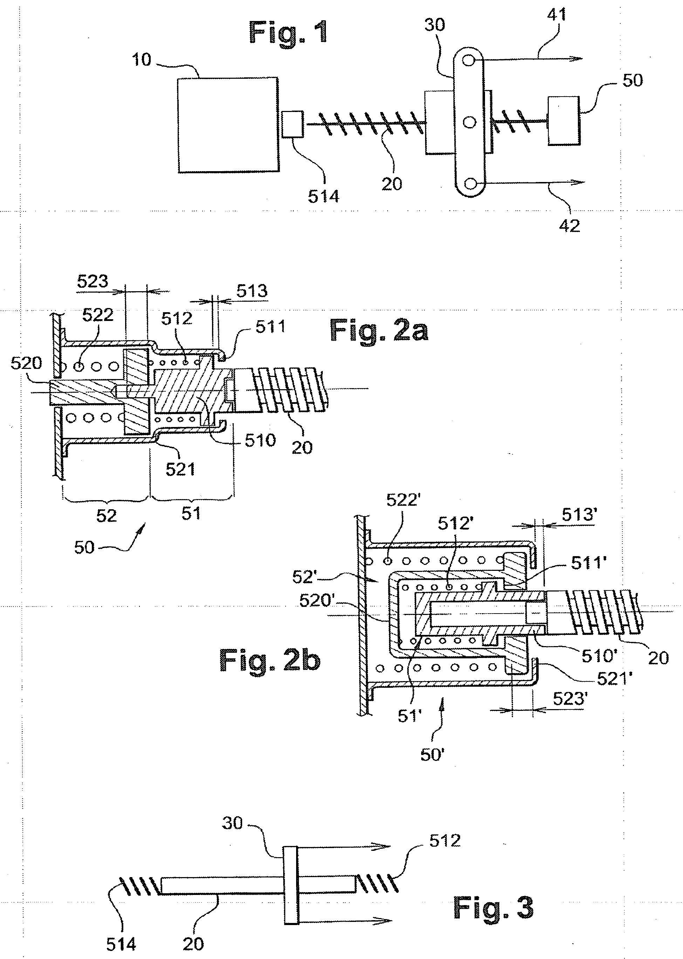

Sur la figure 1 est représenté schématiquement un frein de stationnement électrique comprenant un motoréducteur 10 destiné à entraîner en rotation une vis sans fin 20.

La rotation de la vis 20 déplace en translation un palonnier 30 de répartition d'efforts muni d'un écrou (non représenté) couplé à ladite vis 20. Les câbles 41, 42 de frein sont fixés de part et d'autre du palonnier 30 de sorte que le frein de stationnement puisse être serré et desserré en fonction de la tension exercée sur les câbles par le déplacement du palonnier 30 le long de la vis sans fin 20 sous l'action du motoréducteur 10.

La somme des efforts exercés sur les câbles est directement transmise par le palonnier 30 à la vis 20 et appliquée à un capteur 50 d'efforts axiaux multiples disposé à une extrémité de la vis sans fin 20.

La figure 2a montre un mode de réalisation d'un capteur 50 d'efforts axiaux constitué d'une pluralité de deux capteurs élémentaires 51, 52 couplés mécaniquement en série

Le premier capteur élémentaire 51 est destiné à détecter l'effort de desserrage du frein. A cet effet, ce capteur 51 comprend un corps 510 de capteur sur lequel est appliqué l'effort de desserrage transmis par la vis 20. Le corps 510 est soumis à l'action d'un moyen élastique, ici un ressort 512, qui tend à s'opposer à l'effort axial de desserrage. Au repos, le ressort 512 applique le corps 510 de capteur contre une butée 511. L'effort de desserrage étant très faible, la raideur du ressort 512 doit également avoir une valeur très faible de manière à produire un déplacement mesurable du corps 510 de capteur.

Un second capteur élémentaire 52 est placé dans le capteur 50 à la suite du premier capteur élémentaire 51. Il s'agit d'un capteur élémentaire de serrage qui, comme le capteur élémentaire 51, comprend un corps 520 destiné à recevoir l'effort de serrage via le corps 510 du premier capteur 51, une butée 521 et un ressort 522 qui, au repos, applique le corps 520 contre la butée 521 ou qui se déforme sous l'effort de serrage. Ce dernier étant important, la raideur du ressort 522 doit être élevée afin d'en limiter la déformation et le déplacement.

Le couplage mécanique entre les deux capteurs élémentaires 51, 52 est réalisé par la mise en appui du ressort 512 du premier capteur 51 sur le corps 520 du second capteur 52 et par le débattement existant entre les deux corps 510, 520 de capteur permettant au corps 510 de se déplacer sur sa course utile avant de venir au contact du corps 520.

Ainsi, lors d'un desserrage du frein de stationnement, le second capteur élémentaire 52 est au repos, le corps 520 étant maintenu en appui contre la butée 521 par le ressort 522. Par contre, le corps 510 du premier capteur 51, soumis à l'effort de desserrage, se déplace contre le ressort 512 sur une distance contrôlée par un interrupteur 513 de fin de course. Lorsque le déplacement du corps 510 atteint une valeur donnée, inférieure au débattement entre les deux corps de capteur, l'interrupteur 513 coupe l'alimentation du motoréducteur 10.

Dans le cas d'un serrage du frein de stationnement, l'effort transmis par la vis 20 est très supérieur à l'effort de desserrage de sorte que le corps 510 du premier capteur 51 est déplacé à l'encontre du ressort 512, lequel offre une résistance négligeable, sur tout le débattement jusqu'à entraîner le corps 520 du second capteur 52 contre l'action de rappel du ressort 522. Le déplacement du corps 520 est détecté par un interrupteur 523 qui coupe l'alimentation du motoréducteur 10 dès que la course effectuée par le corps 520 atteint une valeur donnée.

Le ressort 522 est, de préférence, monté dans le capteur 50 avec un effort de précontrainte important afin de limiter la course du mécanisme et de constituer une réserve d'élasticité pour le frein

Il est bien entendu que si le frein de stationnement présente deux, ou plus, valeurs de serrage, on devrait prévoir au moins un troisième capteur élémentaire de serrage à la suite du deuxième capteur 52. Dans ce cas, ce troisième capteur élémentaire serait associé à la valeur de serrage la plus élevée et à un ressort de raideur encore plus élevée que celle du ressort du deuxième capteur.

Une autre solution consisterait à utiliser un même capteur, le capteur 52, mais en plaçant deux interrupteurs à des positions différentes de manière à obtenir deux valeurs d'effort différentes. Il convient dans ce cas d'ajouter un interrupteur (non représenté) destiné à détecter une position du corps 520 par la compression du ressort 522. Cette solution n'est possible que si les valeurs d'efforts sont proches entre elles.

Le détecteur 50' de la figure 2b présente par rapport au détecteur 50 d'efforts de la figure 2a une version optimisée en terme d'encombrement puisque dans cette variante le corps 520' du deuxième capteur entoure de manière coaxiale le corps 510' du premier capteur.

Le fonctionnement du capteur 50' de la figure 2b est identique à celui de la figure 2a. On remarquera seulement que dans le cas de la figure 2b, la butée 511' du corps 510' du premier capteur élémentaire 51' se trouve sur le corps 520' du deuxième capteur élémentaire 52'.

Sur la figure 3, est représenté un dispositif de compensation de frottement au desserrage constitué par un ressort 514 équivalent au ressort 512 de desserrage, monté en antagonisme et de même valeur de raideur.

En effet, avec un seul ressort, la zone de détection autour du zéro d'effort peut ne pas être stable à cause de l'évolution des frottements soit dans la vis, soit dans le capteur d'efforts. Avec deux ressorts antagonistes 512, 514, la vis est centrée et la dispersion compensée car les ressorts peuvent être fabriqués en même temps. La raideur peut aussi être augmentée, ce qui permet de réduire la course de l'interrupteur 513 à 1 mm par exemple. Cette solution est plus robuste et peut être contrôlée et réglée par le fournisseur du motoréducteur 10.

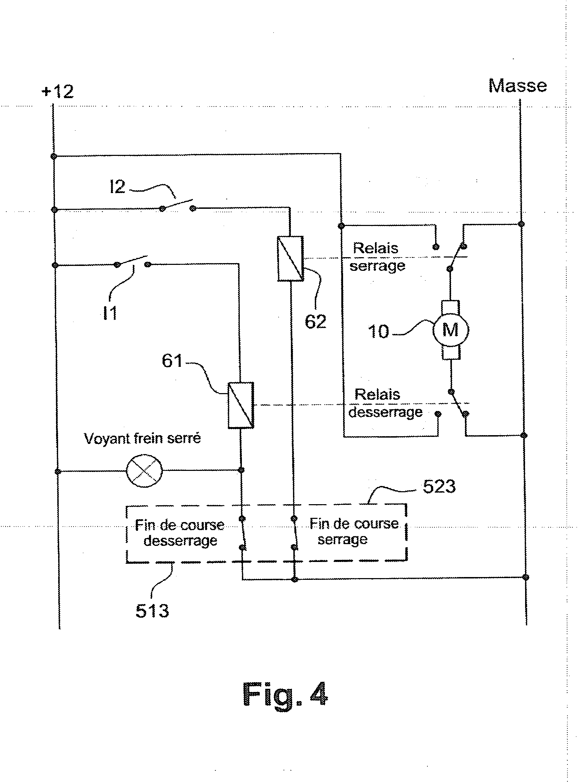

La figure 4 fournit un schéma électrique du détecteur de serrage et de desserrage de l'invention.

Le desserrage du frein est commandé en fermant l'interrupteur I1, l'interrupteur I2 de serrage étant en position ouverte. L'interrupteur 513 de fin de course de desserrage est fermé de sorte que le relais 61 de desserrage alimente le motoréducteur 10 en position de desserrage. Lorsque la fin de course de desserrage est détectée, l'interrupteur 513 s'ouvre, le relais 61 n'est plus alimenté et le motoréducteur 10 est mis hors fonctionnement.

Inversement, le serrage du frein est commandé en fermant l'interrupteur 12, l'interrupteur I1 de desserrage étant en position ouverte. L'interrupteur 523 de fin de course de serrage est fermé de sorte que le relais 62 de serrage alimente le motoréducteur 10 en position de serrage. Lorsque la fin de course de serrage est détectée, l'interrupteur 523 s'ouvre, le relais 62 n'est plus alimenté et le motoréducteur 10 est mis hors fonctionnement.

## Revendications

1. Capteur d'efforts axiaux multiples, **caractérisé en ce que** ledit capteur (50 ; 50') comprend une pluralité de capteurs élémentaires axiaux (51, 52 ; 51', 52') couplés mécaniquement en série, chaque capteur élémentaire étant destiné à détecter un effort axial donné, et chaque capteur élémentaire comprenant :
- un corps (510, 520 ; 510' ; 520') de capteur destiné à recevoir un effort axial,
- une butée (511, 521 ; 511', 521') pour ledit corps de capteur,
- un moyen élastique (512, 522, 512', 522') en appui sur le corps d'un capteur élémentaire immédiatement voisin, et apte à appliquer, au repos, ledit corps de capteur contre ladite butée,
- un détecteur (513, 523, 513' 523') de course apte à détecter une course donnée du corps de capteur effectuée sous l'action dudit effort donné à l'encontre du moyen élastique,
le corps (510 ; 510') de capteur présentant avec le corps (520 ; 520') dudit capteur élémentaire immédiatement voisin un débattement axial au moins égal à ladite course donnée, et le moyen élastique (522 ; 522') dudit capteur élémentaire immédiatement voisin présentant une raideur supérieure à celle du moyen élastique (512 ; 512') dudit capteur élémentaire.

2. Capteur selon la revendication 1, **caractérisé en ce que** le corps (520') du capteur élémentaire immédiatement voisin entoure le corps (510') dudit capteur élémentaire sensiblement de manière coaxiale.

3. Détecteur de serrage et de desserrage d'un frein de stationnement électrique, comprenant un moteur électrique (10) destiné à appliquer sur des câbles (41, 42) de frein au moins un effort de serrage et un effort de desserrage, **caractérisé en ce que** ledit détecteur de serrage et de desserrage comprend un moyen (20, 30) de transmission desdits efforts à un capteur (50, 50') d'efforts axiaux selon l'une des revendications 1 ou 2.

4. Détecteur de serrage et de desserrage selon la revendication 3, **caractérisé en ce que** ledit détecteur de course est un interrupteur (513, 523 ; 513' ; 523') de fin de course apte à commander l'arrêt dudit moteur électrique.

5. Détecteur de serrage et de desserrage selon l'une des revendications 3 ou 4, **caractérisé en ce que** ledit moyen de transmission est un palonnier (30) couplé à une vis sans fin (20).

6. Détecteur de serrage et de desserrage selon l'une quelconque des revendications 3 à 5, **caractérisé en ce qu**'il est disposé à une extrémité de ladite vis sans fin (20).

7. Détecteur de serrage et de desserrage selon l'une quelconque des revendications 3 à 6, **caractérisé en ce que** le moyen élastique (522 ; 522') du capteur élémentaire de l'effort de serrage est pré-chargé.

8. Détecteur de serrage et de desserrage selon la revendication 7, **caractérisé en ce qu**'un moyen élastique (514) équivalent au moyen élastique (512) du capteur élémentaire (50) de l'effort de desserrage est disposé à l'autre extrémité de ladite vis sans fin (20).

## Claims

1. Sensor of multiple axial forces, **characterized in that** the said sensor (50; 50') comprises a plurality of individual axial sensors (51, 52; 51', 52') mechanically coupled in series, each individual sensor being designed to detect a given axial force, and each individual sensor comprising:
- a sensor body (510, 520; 510'; 520') designed to receive an axial force,
- a stop (511, 521; 511', 521') for the said sensor body,
- an elastic means (512, 522; 512', 522') pressing on the body of an immediately adjacent individual sensor, and capable, at rest, of pressing the said sensor body against the said stop,
- a travel detector (513, 523; 513', 523') capable of detecting a given travel of the sensor body made under the action of the said force given against the elastic means,
the sensor body (510; 510') having, with the body (520; 520') of the said immediately adjacent individual sensor, an axial clearance at least equal to the said given travel, and the elastic means (522; 522') of the said immediately adjacent individual sensor having a stiffness greater than that of the elastic means (512; 512') of the said individual sensor.

2. Sensor according to Claim 1, **characterized in that** the body (520') of the immediately adjacent individual sensor surrounds the body (510') of the said individual sensor substantially coaxially.

3. Application and release detector for an electric parking brake, comprising an electric motor (10) designed to apply to the brake cables (41, 42) at least an application force and a release force, **characterized in that** the said application and release detector comprises a means (20, 30) for transmitting the said forces to an axial force sensor (50, 50') according to one of Claims 1 or 2.

4. Application and release detector according to Claim 3, **characterized in that** the said travel detector is an end-of-travel switch (513, 523; 513'; 523') capable of commanding the stopping of the said electric motor.

5. Application and release detector according to one of Claims 3 or 4, **characterized in that** the said transmission means is a rocking lever (30) coupled to a worm (20).

6. Application and release detector according to any one of Claims 3 to 5, **characterized in that** it is placed at one end of the said worm (20).

7. Application and release detector according to any one of Claims 3 to 6, **characterized in that** the elastic means (522; 522') of the individual sensor of the application force is preloaded.

8. Application and release detector according to Claim 7, **characterized in that** an elastic means (514) equivalent to the elastic means (512) of the individual sensor (50) of the release force is placed at the other end of the said worm (20).

## Patentansprüche

1. Sensor für mehrere Axialkräfte, **dadurch gekennzeichnet, dass** der Sensor (50; 50') eine Vielzahl von mechanisch in Reihe gekoppelten Grundaxialsensoren (51, 52; 51', 52') umfasst, wobei jeder Grundsensor dazu bestimmt ist, eine gegebene Axialkraft zu erfassen und jeder Grundsensor Folgendes umfasst:
- einen Körper (510, 520; 510'; 520') des zum Empfang einer Axialkraft bestimmten Sensors,
- einen Anschlag (511, 521; 511', 521') für den Sensorkörper,
- ein elastisches Mittel (512, 522, 512', 522') das am Körper eines unmittelbar benachbarten Grundsensors anliegt und dazu ausgelegt ist, den Körper des Sensors in Ruhestellung an den Anschlag anzulegen,
- einen Hubdetektor (513, 523, 513', 523'), der dazu ausgelegt ist, einen unter der Einwirkung der gegebenen Kraft gegen das elastische Mittel gegebenen Hub zu erfassen,
wobei der Körper (510; 510') des Sensors zu dem Körper (520; 520') des unmittelbar benachbarten Grundsensors eine axiale Auslenkung aufweist, die mindestens gleich dem gegebenen Hub ist, und das elastische Mittel (522; 522') des unmittelbar benachbarten Grundsensors eine Steifigkeit aufweist, die höher als die des elastischen Mittels (512; 512') des Grundsensors ist.

2. Sensor nach Anspruch 1, **dadurch gekennzeichnet, dass** der Körper (520') des unmittelbar benachbarten Grundsensors den Körper (510') des Grundsensors im Wesentlichen auf koaxiale Weise umgibt.

3. Detektor des Spannens und Entspannens einer elektrischen Parkbremse, umfassend einen Elektromotor (10), der dazu bestimmt ist, auf Bremsleitungen (41, 42) mindestens eine Spannkraft und eine Entspannkraft anzulegen, **dadurch gekennzeichnet, dass** der Detektor des Spannens und Entspannens ein Mittel (20, 30) zur Übertragung der Kräfte an einen Sensor (50, 50') für Axialkräfte nach einem der Ansprüche 1 oder 2 umfasst.

4. Detektor des Spannens und Entspannens nach Anspruch 3, **dadurch gekennzeichnet, dass** der Hubdetektor ein Endschalter (513, 523; 513', 523') ist, der dazu ausgelegt ist, das Anhalten des Elektromotors zu steuern.

5. Detektor des Spannens und Entspannens nach einem der Ansprüche 3 oder 4, **dadurch gekennzeichnet, dass** das Mittel zum Übertragen ein mit einer Endlosschraube (20) gekoppelter Schwengel (30) ist.

6. Detektor des Spannens und Entspannens nach einem der Ansprüche 3 bis 5, **dadurch gekennzeichnet, dass** er an einem Ende der Endlosschraube (20) angeordnet ist.

7. Detektor des Spannens und Entspannens nach einem der Ansprüche 3 bis 6, **dadurch gekennzeichnet, dass** das elastische Mittel (522; 522') des Grundsensors der Spannkraft vorgespannt ist.

8. Detektor des Spannens und Entspannens nach Anspruch 7, **dadurch gekennzeichnet, dass** ein elastisches Mittel (514), welches äquivalent zu dem elastischen Mittel (512) des Grundsensors (50) der Entspannkraft ist, am anderen Ende der Endlosschraube (20) angeordnet ist.
